# FASCICULE DE BREVET EUROPEEN

(11) **EP 3 795 465 B1**
(45) Date de publication et mention de la délivrance du brevet: **28.10.2026**
(21) Numéro de dépôt: 20196727.0
(22) Date de dépôt: 17.09.2020
(51) Int. Cl.: B63J 2/08, B63B 25/00

(54) **PROCÉDÉS ET DISPOSITIFS POUR PILOTER UN SYSTÈME DE REFROIDISSEMENT**
VERFAHREN UND VORRICHTUNGEN ZUR STEUERUNG EINES KÜHLSYSTEMS
METHODS AND DEVICES FOR CONTROLLING A COOLING SYSTEM

(30) Priorité: 18.09.2019 FR 1910292
(43) Date de publication de la demande: 24.03.2021
(73) Titulaire: Schneider Electric Industries SAS, 92500 Rueil Malmaison (FR)
(72) Inventeur: CHAMBON, Patrick, 38400 SAINT MARTIN D'HERES (FR); HENRI, Raphael, 38190 LAVAL (FR)
(74) Mandataire: Lavoix

(56) Documents cités:
- CN-A- 108 563 269
- JP-A- H10 175 590
- AMERICAN BUREAU OF SHIPPING ET AL: "CARRIAGE OF INTEGRAL REFRIGERATED CONTAINERS ON BOARD SHIPS", 31 May 2017 (2017-05-31), XP055694001, Retrieved from the Internet <URL:https://ww2.eagle.org/content/dam/eagle/rules-and-guides/current/conventional_ocean_service/220_carriage_integralrefrigeratedcontainersonboardships_2017/CIRC_Guide_e-May17.pdf> [retrieved on 20200512]

## Description

La présente invention se rapporte à des procédés et des dispositifs pour piloter un système de refroidissement, par exemple pour gérer le refroidissement d'une cargaison de containers réfrigérés stockés dans un navire.

Dans le domaine du transport de marchandises, il est connu d'utiliser des containers réfrigérés (parfois nommés « reefers » en anglais) pour transporter des marchandises devant être maintenues à basse température, telles que des denrées périssables, par exemple des produits agricoles, de la nourriture congelée, des médicaments, et bien d'autres exemples encore.

Généralement, un container réfrigéré est un container dans lequel est intégré un appareil de réfrigération. Lorsqu'il est en fonctionnement, l'appareil de réfrigération refroidit l'intérieur du container et dégage de la chaleur à l'extérieur du container.

De tels containers réfrigérés sont fréquemment transportés dans des navires porte-containers, où ils sont empilés dans des baies de stockage dédiées. Leurs appareils de réfrigération sont branchés sur un réseau de distribution électrique du navire.

Pour évacuer la chaleur dissipée par les appareils de réfrigération, les baies de stockage comportent des systèmes de refroidissement, tels que des systèmes de refroidissement à air forcé. Par exemple, des ventilateurs électriques sont installés dans chaque baie de stockage et projettent un flux d'air frais sur les containers empilés.

Toutefois, la consommation électrique résultante est particulièrement élevée, car les containers réfrigérés fonctionnent généralement en continu afin d'éviter tout réchauffement des marchandises transportées.

De plus, comme les containers sont souvent entreposés avec une densité élevée pour ne pas gaspiller de place dans le navire, la quantité de chaleur à évacuer des baies de stockage peut localement atteindre des valeurs très élevées. Ainsi, pour éviter tout incident susceptible de nuire aux marchandises transportées, les systèmes de refroidissement sont fréquemment réglés manuellement par l'équipage du navire pour fonctionner en permanence à leur régime maximum, ce qui consomme beaucoup d'énergie.

Un navire porte-containers comportant : une zone de stockage dans laquelle sont entreposés des containers réfrigérés ; un dispositif de refroidissement comprenant une pluralité de ventilateurs configurés pour refroidir la zone de stockage ; et un dispositif de commande programmé pour piloter le système de refroidissement est connu du document JP H10 175590 A. Il a pu être estimé que, dans un tel navire porte-containers, la consommatior électrique imputable aux containers réfrigérés et aux systèmes de refroidissement associés peut atteindre 70% de la consommation électrique totale du navire, ce qui peut représenter jusqu'à 30% de la consommation d'énergie totale du navire.

Il est souhaitable de réduire cette consommation d'énergie, sans pour autant nuire au bon fonctionnement des containers réfrigérés.

Il existe donc un besoin pour des procédés et des systèmes permettant d'optimiser la consommation électrique de systèmes de refroidissement, notamment dans des systèmes de refroidissement utilisés pour évacuer la chaleur dissipée par des containers réfrigérés stockés à bord d'un navire.

A cet effet, selon un aspect de l'invention, conformément à la revendication 1, un procédé de commande d'un système de refroidissement comportant une pluralité de ventilateurs configurés pour refroidir une zone de stockage d'un navire, dans lequel une consommation électrique de containers réfrigérés entreposés dans la zone de stockage et de ventilateurs du système de refroidissement comprend un minimum, comporte :
mesurer la consommation électrique de containers réfrigérés entreposés dans la zone de stockage et de ventilateurs du système de refroidissement pendant une durée de mesure ;
calculer, par un dispositif électronique de commande, pour chaque ventilateur, une valeur de consigne de la vitesse de rotation, cette valeur de consigne étant calculée en fonction de la consommation électrique mesurée ;
appliquer la valeur de consigne calculée pour chacun des ventilateurs.

Selon l'invention, la valeur de consigne est calculée en déterminant par itérations successives, une valeur de consigne qui minimise la consommation électrique totale en faisant varier la vitesse de rotation des ventilateurs du système de refroidissement, le calcul de la valeur de consigne comportant :
si le dispositif électronique de commande détecte qu'il s'agit d'une première itération du procédé, alors, une valeur prédéfinie est choisie automatiquement comme valeur de consigne ;
si le dispositif électronique de commande détecte qu'il s'agit d'une itération du procédé différente de la première itération, comparer la valeur mesurée de consommation électrique des containers réfrigérés et des ventilateurs du système de refroidissement pendant la durée de mesure, avec une précédente valeur de consommation électrique totale déterminée pour une précédente durée de mesure lors d'une précédente itération du procédé, auquel cas
   si la valeur de consommation électrique totale est inférieure à la précédente valeur de consommation électrique totale, la valeur de consigne est définie comme étant égale à la précédente valeur de consigne, laquelle est augmentée d'une valeur de correction, la valeur de correction étant calculée en fonction de la valeur de consommation électrique totale déterminée pour ladite durée de mesure ;
   ou, si la valeur de consommation électrique totale est supérieure ou égale à la précédente valeur de consommation électrique totale, la valeur de consigne est définie comme étant égale à la précédente valeur de consigne diminuée de la valeur de correction,
le sens d'une incrémentation par rapport aux précédentes itérations étant changé lorsqu'une variation de la consommation électrique change de signe par rapport à la précédente itération,
la valeur de correction ayant un signe positif ou un signe négatif.

Grâce à l'invention, la vitesse de rotation des ventilateurs du système de refroidissement est adaptée en fonction de la consommation électrique des appareils de réfrigération des containers réfrigérés, de manière à consommer le moins d'électricité possible tout en assurant un refroidissement efficace de la zone de stockage, notamment afin d'éviter tout endommagement des marchandises transportées.

Selon des aspects avantageux mais non obligatoires, un tel procédé de commande peut incorporer une ou plusieurs des caractéristiques suivantes, prises isolément ou suivant toute combinaison techniquement admissible :
- Le procédé comporte en outre, pour les valeurs de consigne calculées :
   calculer une vitesse de rotation minimale, à partir de la consommation électrique mesurée, voire aussi à partir de la température maximale autorisée dans la zone de stockage ;
   comparer la valeur de consigne calculée avec la vitesse de rotation minimale ;
   remplacer la valeur de consigne calculée par la vitesse de rotation minimale si la valeur de consigne calculée est inférieure à la vitesse de rotation minimale.
- La mesure de la consommation électrique, le calcul des valeurs de consigne et l'application des valeurs de consigne sont répétées périodiquement.
- Chaque ventilateur est connecté à un contrôleur de moteur à régulateur de vitesse, et dans lequel appliquer la valeur de consigne comporte l'envoi de la valeur de consigne calculée pour ce ventilateur au contrôleur correspondant.
- Appliquer la valeur de consigne calculée pour un ventilateur comporte l'alimentation du ventilateur avec une tension électrique d'alimentation modulée comportant des impulsions périodiques, le taux de modulation des impulsions étant défini en fonction de la valeur de consigne calculée.
- Pour l'application de la valeur de consigne, un premier groupe de ventilateurs du dispositif de refroidissement est alimenté avec une première tension électrique d'alimentation modulée, un deuxième groupe de ventilateurs du dispositif de refroidissement est alimenté avec une deuxième tension électrique d'alimentation modulée, la deuxième tension électrique d'alimentation modulée étant déphasée par rapport à la première tension électrique d'alimentation.
- Chaque ventilateur du premier groupe est adjacent avec un ventilateur du deuxième groupe.
- Les containers réfrigérés sont empilés en colonnes dans la zone de stockage, chaque ventilateur du dispositif de refroidissement étant associé à au moins une colonne de containers réfrigérés.

Selon un autre aspect, l'invention concerne un dispositif électronique de commande d'un système de refroidissement comportant une pluralité de ventilateurs configurés pour refroidir une zone de stockage d'un navire, dans lequel une consommation électrique de containers réfrigérés entreposés dans la zone de stockage et de ventilateurs du système de refroidissement comprend un minimum, le dispositif électronique de commande étant programmé pour :
mesurer la consommation électrique de containers réfrigérés entreposés dans la zone de stockage et de ventilateurs du système de refroidissement pendant une durée de mesure ;
calculer, par un dispositif électronique de commande, pour chaque ventilateur, une valeur de consigne de la vitesse de rotation, cette valeur de consigne étant calculée en fonction de la consommation électrique mesurée ;
appliquer la valeur de consigne calculée pour chacun des ventilateurs.

Selon l'invention, le dispositif électronique de commande est programmé pour calculer la valeur de consigne en déterminant par itérations successives, une valeur de consigne qui minimise la consommation électrique totale en faisant varier la vitesse de rotation des ventilateurs du système de refroidissement, le calcul de la valeur de consigne comportant :
si le dispositif électronique de commande détecte qu'il s'agit d'une première itération du procédé, alors, une valeur prédéfinie est choisie automatiquement comme valeur de consigne ;
si le dispositif électronique de commande détecte qu'il s'agit d'une itération du procédé différente de la première itération, comparer la valeur mesurée de consommation électrique des containers réfrigérés et des ventilateurs du système de refroidissement pendant la durée de mesure, avec une précédente valeur de consommation électrique totale déterminée pour une précédente durée de mesure lors d'une précédente itération du procédé, auquel cas :
   si la valeur de consommation électrique totale est inférieure à la précédente valeur de consommation électrique totale, la valeur de consigne est définie comme étant égale à la précédente valeur de consigne, laquelle est augmentée d'une valeur de correction, la valeur de correction étant calculée en fonction de la valeur de consommation électrique totale déterminée pour ladite durée de mesure ;
   ou, si la valeur de consommation électrique totale est supérieure ou égale à la précédente valeur de consommation électrique totale, la valeur de consigne est définie comme étant égale à la précédente valeur de consigne diminuée de la valeur de correction,
   le sens d'une incrémentation par rapport aux précédentes itérations étant changé lorsque la consommation électrique change de signe par rapport à la précédente itération,
   la valeur de correction ayant un signe positif ou un signe négatif.

Selon un autre aspect, l'invention concerne un navire, comportant :
une zone de stockage dans laquelle sont entreposés des containers réfrigérés ;
un dispositif de refroidissement comprenant une pluralité de ventilateurs configurés pour refroidir la zone de stockage ; et
un dispositif de commande programmé pour piloter le système de refroidissement ;
le dispositif de commande étant tel que décrit précédemment.

L'invention sera mieux comprise et d'autres avantages de celle-ci apparaîtront plus clairement à la lumière de la description qui va suivre d'un mode de réalisation de procédés et de dispositifs de commande d'un système de refroidissement, donnée uniquement à titre d'exemple et faite en référence aux dessins annexés, dans lesquels :
[Fig 1] la figure 1 est une représentation schématique, selon une vue en coupe, d'un navire porte-container comportant un système de refroidissement conforme à des modes de réalisation de l'invention ;
[Fig 2] la figure 2 est une représentation synoptique d'un dispositif de commande du système de refroidissement de la figure 1 ;
[Fig 3] la figure 3 est un diagramme de flux d'un procédé de fonctionnement du dispositif de commande de la figure 2 conformément à des modes de réalisation de l'invention ;
[Fig 4] la figure 4 est un diagramme de flux d'un mode de réalisation alternatif du procédé de la figure 3 ;
[Fig 5] la figure 5 est un diagramme de flux d'un exemple de procédé d'optimisation mis en œuvre lors du procédé de fonctionnement du dispositif de commande de la figure 2 ;
[Fig 6] la figure 6 est un graphique illustrant un exemple de mise en œuvre du procédé d'optimisation de la figure 5 et représentant graphiquement la relation entre la puissance électrique totale consommée par le système de refroidissement et par des containers réfrigérés du navire porte-container de la figure 1 en fonction de la vitesse de rotation de ventilateurs du système de refroidissement ;
[Fig 7] la figure 7 est un diagramme de flux d'un exemple de procédé de pilotage du système de refroidissement de la figure 1 ;
[Fig 8] la figure 8 est une représentation schématique d'un tableau montrant un exemple d'ordre d'activation de ventilateurs du système de refroidissement de la figure 1 ;
[Fig 9] la figure 9 est une représentation schématique d'une modulation d'un signal de commande envoyé à des ventilateurs du système de refroidissement lors du procédé de la figure 7.

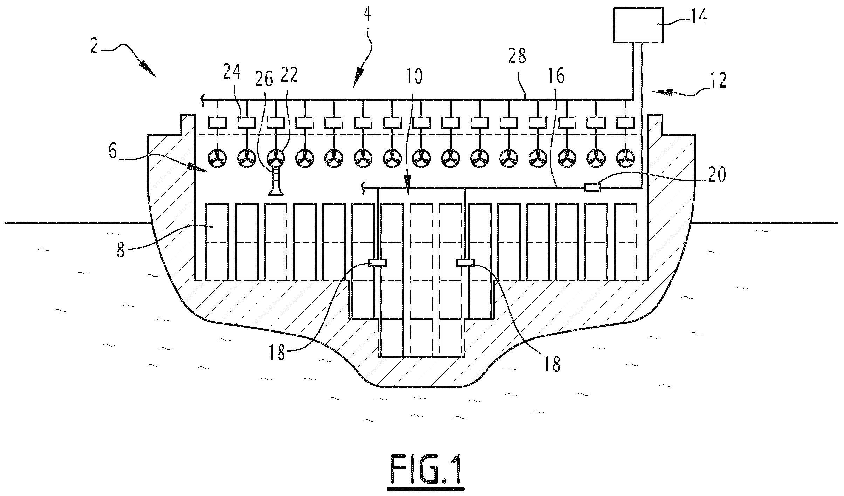

Sur la figure 1 est représenté un navire 2, tel qu'un cargo ou un navire porte-containers, comportant un système de refroidissement 4 associé à une zone de stockage 6 configurée pour recevoir une pluralité de containers réfrigérés 8.

En pratique, un tel navire 2 peut comporter une ou plusieurs cales de stockage. Chaque cale comporte une ou plusieurs baies de stockage. Dans cette description, chaque baie de stockage forme une zone de stockage 6.

Les containers 8 sont par exemple stockés dans chaque baie de stockage 6 en étant empilés pour former des colonnes 10 verticales disposées sur toute ou partie de la largeur de la baie de stockage 6. Des passerelles, non illustrées, permettent à des opérateurs d'accéder à différents étages de la baie de stockage 6 pour atteindre les containers 8 situés à différentes hauteurs de chacune des colonnes 10.

Selon des exemples donnés à titre d'illustration, entre dix et vingt colonnes 10 de containers 8 peuvent être disposées sur la largeur de la baie de stockage 6.

On comprend que ces exemples ne sont pas limitatifs et que d'autres configurations peuvent être utilisées dans des modes de réalisation alternatifs.

Dans ce qui suit, différents exemples du dispositif de refroidissement 4 sont décrits en référence à une seule baie de stockage 6, dans le but de faciliter la compréhension de l'invention. Cependant, en variante, les différentes baies de stockage 6 du navire peuvent être équipées d'un système de refroidissement 4. En variante, un dispositif de refroidissement 4 pourrait être associé à plusieurs baies de stockage 6.

De façon connue, un container réfrigéré 8 est un container dans lequel est intégré un appareil de réfrigération alimenté électriquement et configuré pour refroidir l'intérieur du container. Par exemple, l'appareil de réfrigération comporte un circuit de réfrigération à compression de vapeur, ou un module de réfrigération thermoélectrique.

Avantageusement, le navire 2 comporte un réseau de distribution électrique 12 alimenté par une source d'alimentation électrique 14, telle qu'un générateur ou une batterie électrique du navire 2.

Le réseau 12 est notamment configuré pour alimenter en électricité les containers 8 entreposés dans chaque baie de stockage 6.

Par exemple, chaque baie de stockage 6 comporte au moins une ligne d'alimentation électrique 16 connectée au réseau 12 et une pluralité de prises électriques 18 réparties dans la baie de stockage 6 et alimentées par ladite au moins une ligne 16.

Selon des exemples, les prises 18 sont regroupées dans des blocs qui sont disposées à différents emplacements de la baie de stockage 6, par exemple à différents étages de la baie de stockage 6. Les appareils de réfrigération des containers 8 sont branchés sur ces prises, par exemple au moyen de câbles électriques.

Selon des modes de réalisation, chaque baie de stockage 6 comporte au moins un dispositif de mesure 20 associé au réseau 12 et configuré pour mesurer la consommation électrique des containers 8 entreposés dans la baie de stockage 6.

Selon des exemples, le dispositif de mesure 20 est configuré pour mesurer uniquement la consommation électrique de l'ensemble des containers 8 stockés dans la baie de stockage 6.

En variante, un ou plusieurs dispositifs de mesure 20 peuvent être configurés pour mesurer la consommation électrique avec une granularité plus fine, par exemple pour mesurer la consommation électrique de sous-ensembles de containers 8 parmi ceux entreposés dans la baie 6, voire pour mesurer la consommation électrique individuelle de chacun des containers 8.

Par exemple, la consommation électrique est mesurée à partir d'une ou plusieurs grandeurs électriques, telles que la puissance électrique consommée à un ou plusieurs instants, ou l'énergie consommée pendant une durée donnée, ou de toute autre indicateur pertinent représentatif de la consommation électrique.

Dans les différents modes de réalisation exposés dans la suite de la description, la consommation électrique est mesurée en mesurant la puissance électrique consommée. Toutefois, ce choix donné à titre d'illustration n'est pas limitatif et les exemples décrits sont applicables au cas où la consommation électrique serait mesurée différemment.

Selon des modes de réalisation, le système de refroidissement 4 est un système de refroidissement à air forcé et comporte une pluralité de ventilateurs 22 installés dans la baie de stockage 6 ou à proximité de la baie de stockage 6.

Par exemple, les ventilateurs 22 sont des ventilateurs électriques comportant chacun un moteur électrique.

Chaque ventilateur 22 est associé à un circuit de pilotage 24 qui alimente et commande le ventilateur 22. Les circuits de pilotage 24 reçoivent des ordres de commande depuis un dispositif de commande qui sera décrit dans ce qui suit.

Par exemple, chaque circuit de pilotage 24 comporte un contrôleur de moteur à vitesse variable.

En variante, chaque circuit de pilotage 24 comporte un contacteur, ou un relais, ou tout système de commutation électrique approprié permettant d'activer ou d'interrompre sélectivement le moteur du ventilateur 22 auquel il est connecté.

Les ventilateurs 22 sont configurés pour ventiler la baie de stockage 6, par exemple pour projeter un flux d'air frais sur les containers 8 empilés.

Par exemple, les ventilateurs 22 sont placés sur une zone supérieure de la baie de stockage 6.

Selon des modes de réalisation préférés, les ventilateurs 22 sont associés à des conduits de ventilation 26 qui distribuent l'air ventilé dans toute la baie de stockage 6. Seul un conduit de ventilation 26 est illustré sur la figure 1 pour ne pas nuire à la lisibilité de la figure.

Selon des exemples de réalisation, chaque conduit de ventilation 26 est associé à un unique ventilateur 22 et est agencé pour distribuer l'air ventilé vers une colonne 10 de containers 8.

Par exemple, chaque conduit 26 s'étend verticalement depuis un ventilateur 22 en descendant vers le fond de la baie de stockage 6. Dans l'exemple illustré, chaque ventilateur 22 est aligné avec une colonne 10 de containers 8.

Dans certains modes de réalisation, un ventilateur 22 pourrait refroidir deux conduits 26, voire plus. Un tel arrangement peut être choisi lorsque les colonnes 10 associées à ces conduits 26 contiennent peu de containers 8, par exemple à cause de la forme de la coque du navire 2 à l'avant ou à l'arrière du navire 2.

Pour favoriser le refroidissement des containers 8, chaque conduit 26 comporte avantageusement des ouvertures, telles que des bouches d'aération. De préférence, chaque ouverture est placée en face d'un container 8 de la colonne 10 correspondante. Par exemple, les ouvertures sont placées à des hauteurs prédéterminées par rapport au fond de la baie de stockage 6, ces hauteurs étant choisies en fonction de dimensions normalisées des containers 8.

Selon des modes de réalisation, les ventilateurs 22 et les circuits de pilotage 24 sont alimentés électriquement par la source d'alimentation électrique 4 du navire 2, à laquelle ils sont connectés par l'intermédiaire d'une ou de plusieurs lignes d'alimentation électrique 28.

De préférence, le système 4 comporte des dispositifs de mesure configurés pour mesurer la consommation électrique des ventilateurs 22, par exemple pour mesurer la puissance consommée par les ventilateurs 22. Ces dispositifs de mesure, non illustrés sur la figure 1, peuvent être associés à la ligne d'alimentation 28 et peuvent présenter un fonctionnement semblable à celui du dispositif de mesure 20.

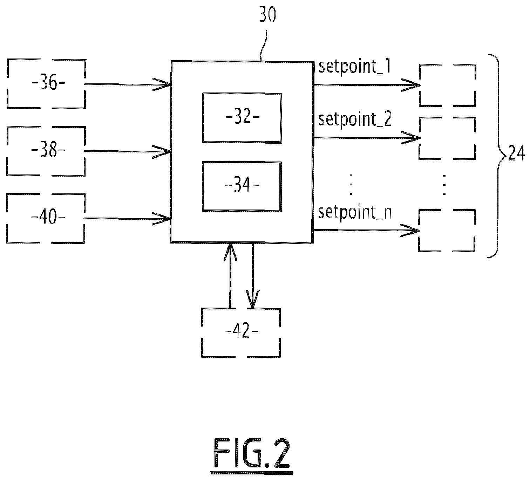

Sur la figure 2 est schématisé un dispositif électronique de commande 30 configuré pour piloter le système de refroidissement 4.

En pratique, le dispositif 30 est notamment programmé pour :
- mesurer la consommation électrique des containers 8 entreposés dans la zone de stockage 6 et des ventilateurs 22 du système de refroidissement 4 pendant une durée de mesure ;
- calculer une valeur de consigne de la vitesse de rotation pour chaque ventilateur 22 en fonction de la consommation électrique mesurée ;
- appliquer la valeur de consigne calculée pour chacun des ventilateurs 22.

En pratique, comme expliqué plus en détail ci-après, le dispositif 30 peut être programmé pour mesurer la consommation électrique totale des containers 8 et du système de refroidissement 4, ou bien pour mesurer séparément la consommation électrique des containers 8 entreposés dans la zone de stockage 6 d'une part et des ventilateurs 22 du système de refroidissement 4 d'autre part, par exemple en utilisant des dispositifs de mesure différents.

Selon des modes de réalisation, le dispositif 30 comporte un processeur 32 et une mémoire 34. Par exemple, le dispositif 30 est un automate industriel ou un contrôleur logique programmable.

Selon des exemples, le processeur 32 est un microcontrôleur, ou un microprocesseur, ou équivalent.

La mémoire 34 est un support d'enregistrement de données lisibles par ordinateur et peut comporter une mémoire volatile (RAM) ou une mémoire non volatile telle qu'une mémoire Flash, ou une mémoire NVRAM, ou une mémoire magnétique, ou une mémoire programmable (EEPROM), ou toute technologie de mémoire appropriée.

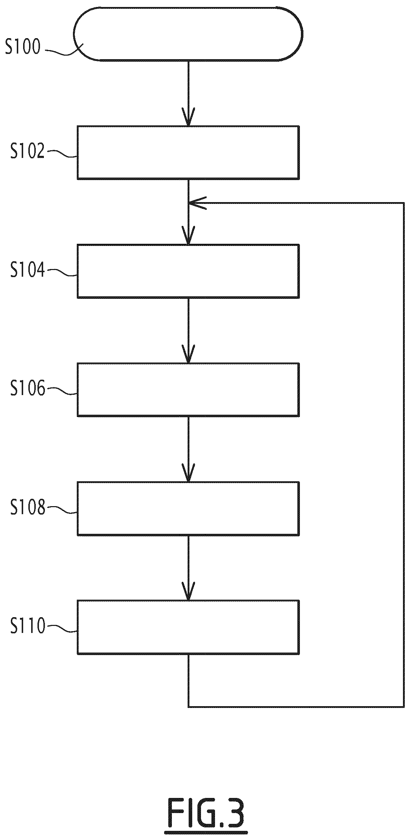

La mémoire 34 contient des instructions exécutables et/ou des modules de code logiciel et/ou un produit-programme d'ordinateur, pour mettre en œuvre un procédé de pilotage du système 4, par exemple tel que décrit en référence à la figure 3.

Ces exemples ne sont cependant pas limitatifs et le dispositif de commande 30 peut comporter, dans des modes de réalisation alternatifs, un circuit électronique comprenant un composant logique programmable (FPGA, pour Field Programmable Gate Array), ou un circuit intégré spécialisé (ASIC, pour Application Specific Integrated Circuit), ou tout autre dispositif équivalent.

Le dispositif de commande 30 est couplé à un ou plusieurs dispositifs de mesure associés à la baie de stockage 6. Par exemple, des capteurs et des dispositifs de mesure sont connectés à une interface d'acquisition de données du dispositif 30.

Selon des modes de réalisation, le système 4 comporte un premier dispositif de mesure 36 configuré pour mesurer la température dans la baie 6, telle qu'une température en un ou plusieurs points de la baie 6.

Par exemple, ce dispositif 36 regroupe un ou plusieurs capteurs de température disposés dans la ou chaque baie 6 du navire 2. Ce dispositif 36 peut également comporter un ou plusieurs capteurs de température configurés pour mesurer la température ambiante à l'extérieur de la baie 6.

Un deuxième dispositif de mesure 38, regroupant le ou les dispositifs de mesure 20 précédemment décrits, est configuré pour mesurer la puissance électrique consommée par les containers 8 de la baie 6.

Un troisième dispositif de mesure 40, par exemple regroupant les dispositifs de mesure précédemment décrits associés à la ligne d'alimentation 28, est configuré pour mesurer la puissance électrique consommée par les ventilateurs 22 et par les circuits 24 du dispositif de refroidissement 4.

Selon des modes de réalisation, le dispositif de commande 30 est connecté à un ordinateur de bord 42 du navire 2, par exemple au moyen d'un réseau informatique du navire 2.

Par exemple, le dispositif 30 peut recevoir de l'ordinateur de bord 42 des informations relatives aux containers 8 stockés dans la baie 6, telles qu'un plan de chargement des containers 8. Le dispositif 30 peut aussi envoyer des informations à destination de l'ordinateur de bord 42, telles que des informations de diagnostic.

Selon des exemples, le dispositif 30 calcule et fournit automatiquement en sortie une valeur de consigne pour chaque ventilateur 22.

De préférence, la valeur de consigne est une vitesse de rotation.

Par exemple, des signaux de commande, notés « setpoint_1 », « setpoint_2 » et « setpoint_n » sur la figure 2, sont envoyés aux circuits de pilotage 24 respectifs des ventilateurs 22, par exemple au moyen de câbles ou d'un bus de données.

Un exemple de mise en œuvre d'un procédé de pilotage du système de refroidissement 4 est maintenant décrit en référence à la figure 3.

Le procédé débute par l'étape S100.

Selon des modes de réalisation préférés, au moins une partie des étapes du procédé sont répétées régulièrement au cours du temps, par exemple périodiquement, avec au moins une période T_{cycle} prédéfinie. Par exemple, la période T_{cycle} a une durée comprise entre une minute et une heure.

Lors d'une étape S102, le dispositif 30 commence à mesurer la consommation électrique, par exemple en mesurant la puissance électrique instantanée consommée par les containers réfrigérés 8 et par le système de refroidissement 4, par exemple au moyen des dispositifs de mesure 38 et 40.

De préférence, cette mesure est répétée en permanence pendant l'exécution du procédé, de sorte à fournir tous les échantillons de mesure nécessaire au calcul de la puissance moyenne sur une période T_{cycle}.

Lors d'une étape S104, le dispositif 30 attend l'expiration d'une durée de mesure, ici égale à la période de mesure T_{cycle}, tout en continuant à mesurer la puissance électrique consommée par les containers réfrigérés 8 et par le système de refroidissement 4.

Optionnellement, le dispositif 30 peut également mesurer la température dans la baie de stockage au moyen du dispositif de mesure 36.

Puis, lors d'une étape S106, le dispositif 30 calcule automatiquement la valeur moyenne des puissances électriques consommées par les containers réfrigérés 8 et par le système de refroidissement 4 pendant la durée de mesure T_{cycle}, à partir des valeurs de puissance instantanées précédemment mesurées.

Par exemple, le dispositif 30 calcule une valeur de puissance électrique moyenne totale égale à la somme de la puissance électrique moyenne consommée par le système 4 et de la puissance électrique moyenne consommée par l'ensemble des containers réfrigérés 8.

Par exemple, dans ce qui suit, la puissance électrique moyenne consommée par le système 4 est considérée égale à la puissance électrique consommée par les ventilateurs 22 du système 4.

En variante, le dispositif 30 peut également calculer et conserver en mémoire la valeur moyenne de puissance électrique consommée par le seul système de refroidissement 4 séparément des valeurs moyennes de puissance consommée par les containers 8.

Selon d'autres variantes, des valeurs de puissance électrique moyenne peuvent également être calculées pour seulement certains sous-ensembles des containers 8, voire pour des containers 8 individuels. Pour ce faire, les systèmes de mesure 38 et 40 peuvent être modifiés de manière à permettre une mesure de la puissance électrique pour ces seuls sous ensemble. Alternativement, les valeurs de puissance électrique consommée par ces sous-ensembles peuvent être estimées à partir de la valeur totale mesurée.

Par exemple, la puissance moyenne consommée pour une colonne 10 est estimée à partir de la puissance électrique moyenne consommée par le ventilateur 22 associé à ladite colonne 10 et à partir de la puissance électrique moyenne consommée par les containers 8 appartenant à cette colonne, celle-ci étant estimée en divisant la valeur de puissance électrique consommée par l'ensemble des containers 8 par le nombre de containers présents dans cette colonne.

Optionnellement, le dispositif 30 peut également calculer la température moyenne dans la baie de stockage à partir des valeurs de température précédemment mesurées.

Lors d'une étape S108, le dispositif 30 calcule automatiquement une valeur de consigne de la vitesse de rotation de chaque ventilateur 22 en fonction des valeurs de puissance électrique moyennes obtenues à l'issue de l'étape S106.

La valeur de consigne est calculée en implémentant une méthode d'optimisation afin de déterminer une valeur de consigne pour laquelle la consommation électrique des containers 8 et des ventilateurs 22 est atteint un minimum lorsque les ventilateurs 22 sont pilotés avec cette valeur de consigne.

Cela permet d'adapter automatiquement la consommation électrique tout en maintenant la baie de stockage 6 et la cargaison de containers 8 à une température acceptable, sans qu'il ne soit nécessaire à des opérateurs de spécifier une température de consigne.

On comprend de façon générale que, même si la valeur de consigne ainsi calculée à l'étape S108 sert à contrôler les ventilateurs 22, elle permet aussi de contrôler indirectement le fonctionnement des containers 8, en régulant la température qui règne dans la baie de stockage 6.

En effet, lorsque la baie de stockage 6 n'est pas suffisamment refroidie par les ventilateurs 22, les containers 8 doivent consommer plus d'électricité pour refroidir leur cargaison et éviter qu'elle ne se réchauffe à cause de l'excès de chaleur dans la baie de stockage 6.

Une fois ces valeurs de consignes calculées, lors d'une étape S110, le dispositif 30 applique automatiquement lesdites valeurs de consigne sur les ventilateurs 22, par exemple en transmettant lesdites valeurs aux circuits 24 respectifs des ventilateurs.

De préférence, l'application des valeurs de consigne est faite simultanément sur tous les ventilateurs 22 du système 4.

Les étapes S102, à S110 sont de préférence répétées périodiquement avec la période T_{cycle}.

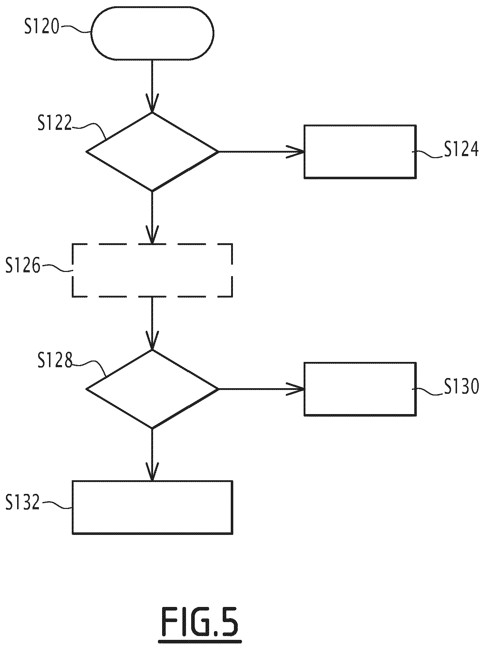

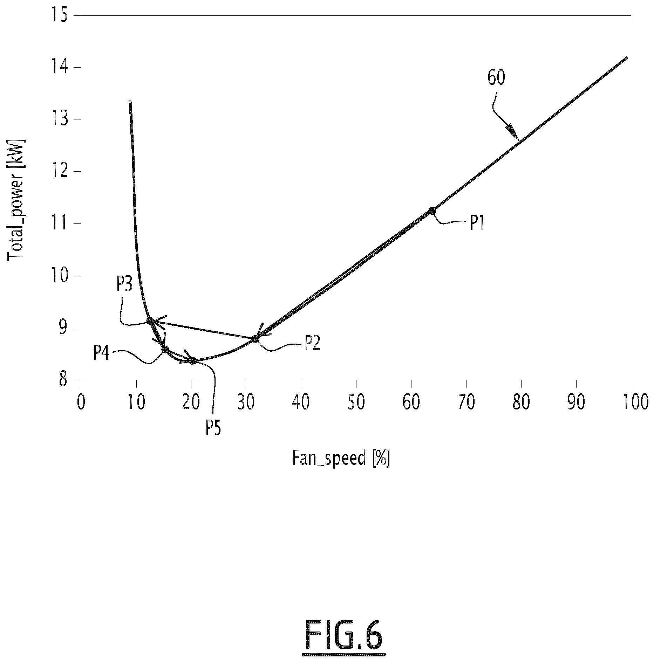

Les figures 5 et 6 illustrent un mode de réalisation du calcul mis en œuvre lors de l'étape S108. Lors de l'étape S108, la valeur de consigne est calculée en mettant en œuvre une méthode d'optimisation. Cette optimisation peut être réalisée de façon itérative, par répétitions successives de l'étape S108, par exemple lors de la répétition périodique du procédé de la figure 3.

Par exemple, cette optimisation permet de calculer une valeur de consigne pour laquelle la consommation électrique est minimale.

En d'autres termes, selon des modes de réalisation préférés, la valeur de consigne est calculée en déterminant par itérations successives, une valeur de consigne qui minimise la consommation électrique totale, en faisant varier la vitesse de rotation des ventilateurs 22 du système de refroidissement 4.

Dans l'exemple illustré sur la figure 6, la courbe 60 représente l'évolution de la puissance électrique moyenne totale « Total_power » consommée par le système de refroidissement 4 (ici exprimée en kW) et par les containers réfrigérés 8 disposés dans la ou les baies de stockage 6 associés à ce système 4, en fonction de la vitesse de rotation « Fan_speed » des ventilateurs 22 du système 4 (ici exprimée en pourcentage de la valeur de rotation maximale).

Par exemple, la courbe 60 présente une forme parabolique.

En pratique, lorsque la vitesse de rotation des ventilateurs 22 augmente, la consommation du système 4 augmente.

Lorsque la vitesse de rotation des ventilateurs 22 diminue en dessous d'un certain seuil, la consommation des containers réfrigérés 8 augmente fortement, car le système 4 n'évacue plus suffisamment la chaleur dégagée par les appareils de réfrigération des containers réfrigérés 8 et ceux-ci doivent produire encore plus de froid pour éviter tout réchauffement des marchandises transportées.

Ainsi, la courbe 60 présente un minimum pour lequel la puissance consommée est minimale. Le procédé d'optimisation mis en œuvre lors de l'étape S108 vise donc à localiser ce minimum et à identifier la vitesse de rotation correspondante.

Sur la figure 6, les points P1, P2, P3, P4 et P5 représentent les valeurs de consigne déterminées successivement par différentes itérations du procédé d'optimisation. Les flèches reliant ces points deux à deux illustrent les transitions d'une itération à l'itération suivante.

Par exemple, le point P1 correspond à la valeur de consigne calculée à l'issue de la première exécution de l'étape S108, le point P2 correspond à la valeur de consigne calculée à l'issue de la deuxième exécution de l'itération de l'étape S108 lors de la période T_{cycle} immédiatement suivante, et ainsi de suite.

De préférence, le procédé d'optimisation est prévu pour converger rapidement vers le minimum de la courbe 60, de manière à ce qu'une valeur de consigne fiable puisse être calculée dès les premières itérations du procédé.

En variante, le profil de la courbe 60 pourrait être différent et pourrait comporter plusieurs minimums locaux. Dans ce cas, le procédé d'optimisation peut être prévu pour converger vers un minimum en particulier, ou vers n'importe quel minimum local.

En pratique, la courbe 60 n'est pas toujours connue à l'avance, puisque les échanges de chaleur au sein de la baie de stockage 6 dépendent de nombreux paramètres opérationnels, telles que les caractéristiques du navire, la température ambiante, les caractéristiques de la cargaison et des containers 8 eux-mêmes, notamment le rendement de leur dispositif de refroidissement ou le degré d'isolation thermique procuré par leurs parois.

La courbe 60 peut notamment dépendre de caractéristiques géométriques de la baie de stockage 6 et de la cargaison transportée, telles que la répartition ou le plan de chargement des containers 8 dans la baie de stockage 6. Ces informations sur la répartition et le plan de chargement sont, par exemple, acquises depuis l'ordinateur de bord 42, ce qui peut simplifier les calculs mis en œuvre lors de l'étape S108.

En revanche, dans certaines variantes optionnelles, une courbe 60 théorique pourrait être calculée à l'avance et enregistrée en mémoire, par exemple si la baie de stockage 6 et son chargement de containers 8 a été préalablement modélisée. Cette courbe théorique peut alors être prise en compte lors des calculs mis en œuvre pendant l'étape S108, ce qui permet d'accélérer la recherche du minimum.

Dans l'exemple illustré, la puissance totale est exprimée en fonction d'une même vitesse de rotation identique pour tous les ventilateurs 22 du système 4.

En variante, le procédé d'optimisation peut être mis en œuvre séparément pour calculer plusieurs valeurs de consigne chacune associée à un ou plusieurs des ventilateurs 22. Dans ce cas, le procédé d'optimisation peut être prévu pour rechercher le minimum de la puissance totale consommée, ou pour rechercher le minimum de la puissance consommée par seulement une partie des ventilateurs 22 et des containers 8.

Par exemple, pour calculer une valeur de consigne d'un ventilateur associé à une colonne 10, le procédé d'optimisation peut être prévu pour rechercher le minimum de puissance consommée par le ventilateur 22 et par les containers 8 de ladite colonne 10.

Comme expliqué précédemment, ce procédé peut être généralisé à des modes de réalisation dans lesquels la consommation électrique du ventilateur 22 et des containers 8 est mesurée à partir d'une autre grandeur que la puissance électrique.

Dans d'autres modes de réalisation, le procédé d'optimisation pourrait être mis en œuvre différemment, par exemple en utilisant l'algorithme du gradient, ou toute autre méthode d'optimisation appropriée pour déterminer un minimum d'une fonction.

Une mise en œuvre du procédé d'optimisation pendant l'étape S108 est maintenant décrit plus en détail en référence au diagramme de la figure 5.

Le procédé débute lors de l'étape S120.

Selon des modes de réalisation, lors d'une étape S122, le dispositif 30 détermine s'il s'agit de la première itération du procédé.

Par exemple, un compteur est automatiquement incrémenté par le dispositif 30 lors de chaque itération du procédé (notamment lors de chaque itération de l'étape S108). Ce compteur est remis à zéro lorsque le procédé de pilotage du système 4 est interrompu, par exemple lorsque le système 4 est éteint.

Si le dispositif 30 détecte qu'il s'agit de la première itération du procédé, alors, lors d'une étape S124, une valeur prédéfinie est choisie automatiquement comme valeur de consigne.

Dans le cas contraire, lors d'une étape S128, la valeur de puissance moyenne totale consommée pendant l'intervalle de mesure par les containers réfrigérés et par les ventilateurs du système de refroidissement (par exemple telle que déterminée à l'issue de l'étape S106) est comparée à la valeur de puissance moyenne totale déterminée lors de la précédente itération du procédé.

Si la valeur de puissance moyenne totale est inférieure à la précédente valeur de puissance moyenne totale, alors, lors d'une étape S130, la valeur de consigne est calculée comme étant égale à la précédente valeur de consigne (c'est-à-dire la valeur de consigne calculée lors de la précédente itération du procédé) à laquelle est retranchée une valeur de correction prédéfinie, qui peut, selon les cas, avoir un signe positif ou un signe négatif.

En d'autres termes, selon les cas, la valeur de consigne est augmentée ou diminuée par rapport à la précédente valeur de consigne. La valeur absolue de cette augmentation ou de cette diminution est égale à la valeur de correction prédéfinie.

Notamment, le sens de l'incrémentation (par rapport aux précédentes itérations) est changé lorsque la variation de puissance (ou plus généralement la consommation électrique) change de signe par rapport à la précédente itération.

Selon des modes de réalisation, la valeur de correction est calculée en fonction de la valeur de puissance électrique moyenne totale déterminée pour ladite durée de mesure. Par exemple, la valeur de correction est inversement proportionnelle à la valeur de puissance électrique moyenne totale.

En pratique, le calcul de la valeur de correction est, par exemple, réalisé lors d'une étape S126 précédant l'étape S128 ou étant concomitante à l'étape S128.

En variante, la valeur de correction est fixe, auquel cas l'étape S126 est omise ou remplacée par une étape d'acquisition (par ex., de lecture en mémoire) de la valeur de correction.

En revanche, si lors de l'étape S128, la valeur courante de puissance moyenne totale est identifiée comme étant supérieure ou égale à la précédente valeur de puissance moyenne totale, alors lors d'une étape S132, la valeur de consigne est augmentée ou diminuée, c'est-à-dire calculée comme étant égale à la précédente valeur de consigne à laquelle est ajoutée ladite valeur de correction qui peut, selon les cas, avoir un signe positif ou un signe négatif.

Ainsi, entre deux itérations successives, le procédé d'optimisation se rapproche pas à pas de la valeur de consigne optimale correspondant au minimum de puissance électrique consommée, et change de sens s'il détecte qu'il s'éloigne de ladite valeur de consigne optimale. Cela permet de favoriser une convergence rapide du procédé d'optimisation vers la valeur optimale. Par « rapide », on entend par exemple que le procédé converge en moins de 20 itérations ou en moins de 10 itérations.

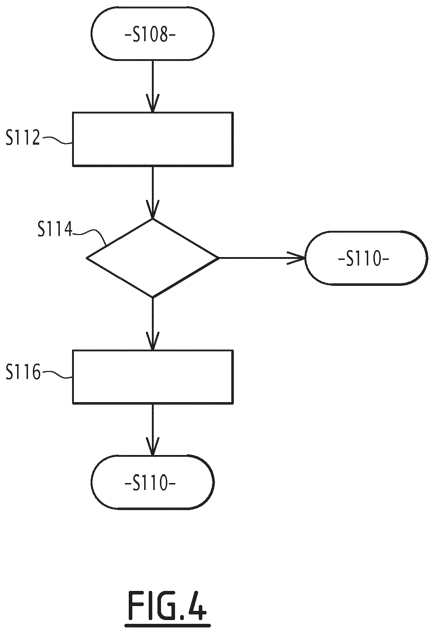

La figure 4 illustre un mode de réalisation alternatif et optionnel utilisable dans le procédé de la figure 3, dans lequel une vitesse de rotation minimale est imposée aux ventilateurs 22, afin de garantir un flux d'air frais minimal dans la baie 6 quelles que soient les circonstances et ainsi garantir que la température interne de la baie 6 n'excède pas un seuil maximal quelques soient les conditions. Cela permet de parer à l'éventualité où le calcul mis en œuvre lors de l'étape S108 aurait pour résultat une valeur de consigne aberrante.

Ainsi, postérieurement à l'étape S108 et préalablement à l'étape S110, lors d'une étape S112, le dispositif 30 calcule automatiquement au moins une valeur de vitesse de rotation minimale, en fonction des valeurs moyennes de puissance électrique calculées lors de l'étape S106, ainsi qu'en fonction des valeurs de température moyenne calculées lors de cette même étape.

Selon des exemples, différentes valeurs de vitesse de rotation minimale peuvent être calculées (par exemple si la répartition de la température dans la baie de stockage impose des flux d'air minimaux différents aux différents ventilateurs), par exemple pour imposer une vitesse minimale pour chaque ventilateur 22, ou bien à seulement une partie des ventilateurs 22. En variante, une seule et même valeur de rotation minimale est calculée pour l'ensemble des ventilateurs 22 (par exemple si la configuration du chargement ou de la baie 6 ne nécessite pas de différencier le flux d'air pour les différents ventilateurs).

Selon un exemple donné à titre d'illustration, la vitesse de rotation est calculée en fonction de la puissance électrique moyenne consommée par les containers 8 et par le système 4 de la baie 6, et en fonction de la température ambiante et de la température dans la baie 6, par exemple au moyen de la formule suivante : $F = \frac{K}{Q} \times \frac{{P}_{total} + {P}_{resp}}{C \times \left({T}_{amb}-{T}_{hold _ max}\right)}$ où :
« K » est une constante numérique permettant de convertir un flux massique d'air en un flux volumique d'air, dont la valeur est ici égale à 3,035 x 10³ ;
« Q » est le débit volumique théorique de chaque ventilateur 22, ici exprimé en m³ par heure ;
« C » est la capacité thermique massique de l'air, ici choisie égale à 1004 J.kg⁻¹.K ;
« T_{amb} » et « T_{hold_max} » sont, respectivement, la température ambiante et la température maximale dans la baie 6, la température ambiante T_{amb} étant par exemple mesurée à l'extérieur de la baie 6, par exemple sur un pont du navire 2, la température maximale T_{hold_max} étant une limite préalablement définie par un utilisateur ;
« Pₜₒₜₐₗ » est la puissance électrique moyenne consommée par les containers 8 et par le système 4 ;
« Pᵣₑₛₚ » est la puissance thermique dite de respiration dégagée par le contenu des containers 8.

La valeur de la puissance Pᵣₑₛₚ n'est en général pas mesurable en temps réel et ne peut pas toujours être estimée à l'avance. En pratique, une valeur prédéfinie peut être choisie à l'avance, notamment en fonction du type de marchandise transportée par les containers 8. Par exemple, la puissance Pᵣₑₛₚ est choisie égale à 1500W par container.

Selon des variantes, les valeurs de la température T_{amb} peuvent être remplacées par des valeurs fixes dans le cas où une mesure ne serait pas possible.

En variante, la vitesse de rotation minimale des ventilateurs 22 pourrait être calculée différemment, sans nécessairement utiliser la formule décrite ci-dessus.

Lors d'une étape S114, le dispositif 30 compare automatiquement, par exemple pour chaque ventilateur, la valeur de consigne calculée à l'issue de l'étape S108 avec la valeur de vitesse minimale calculée lors de l'étape S112.

Si la valeur de consigne est supérieure ou égale à la valeur de vitesse minimale, alors la valeur de consigne calculée est conservée puis appliquée lors de l'étape S110.

Dans le cas contraire, si la valeur de consigne est inférieure à la valeur de vitesse minimale, alors, lors d'une étape S116, la valeur de consigne calculée est remplacée par la valeur de vitesse minimale, et c'est cette valeur de vitesse minimale qui est ensuite transmise au ventilateur 22 lors de l'étape S110. En d'autres termes, la valeur de consigne calculée est rejetée au profit de la valeur de vitesse minimale.

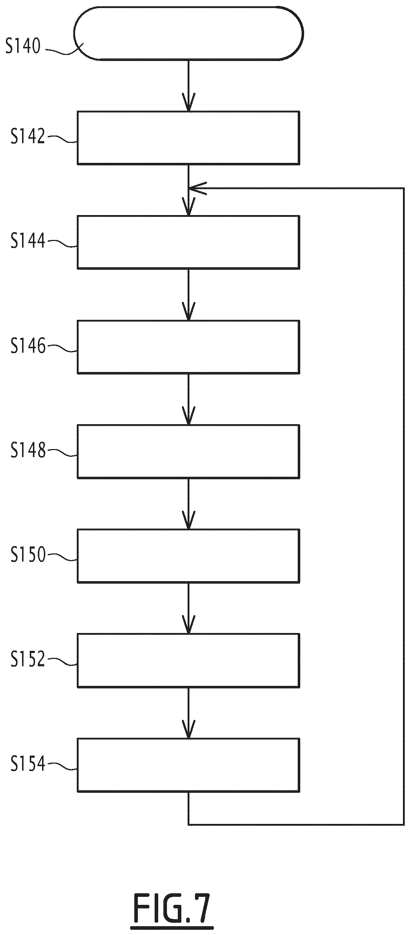

Des exemples d'implémentation de l'étape S110 sont maintenant décrits, notamment en référence aux figures 7, 8 et 9.

Comme expliqué précédemment, dans des premiers modes de réalisation, le circuit 24 comporte un contrôleur de moteur à régulateur de vitesse qui sert à piloter un ventilateur 22.

Dans ce cas, l'étape S110 d'application de la valeur de consigne comporte l'envoi de la valeur de consigne calculée pour ce ventilateur 22 au contrôleur 24 correspondant.

Une fois cette information reçue, le contrôleur 24 règle automatiquement des paramètres d'alimentation électrique du moteur du ventilateur 22 pour imposer au ventilateur 22 la vitesse de rotation définie par la valeur de consigne.

Selon des deuxièmes modes de réalisation, un tel contrôleur n'est pas utilisé, par exemple pour des raisons de coût trop élevé.

La régulation de vitesse est alors effectuée pour chaque ventilateur 22 par le dispositif 30 en ayant recours à une technique de modulation de largeur d'impulsions (« Pulse Width Modulation » en anglais).

Notamment, pour appliquer la valeur de consigne calculée, chaque ventilateur 22 est alimenté électriquement avec une tension électrique d'alimentation modulée comportant des impulsions périodiques, le taux de modulation des impulsions étant défini en fonction de la valeur de consigne calculée.

Par exemple, le taux de modulation est égal à la vitesse de consigne de rotation calculée, vitesse de consigne étant exprimée en pourcentage de la valeur maximale de rotation admissible par le ventilateur 22.

Selon des exemples d'implémentation, le contrôleur 24 de chaque ventilateur 22 comporte un contacteur, ou un relais, ou tout dispositif de commutation électrique approprié, qui est piloté à distance par le dispositif 30.

Plus précisément, le contrôleur 24 est configuré pour être sélectivement commuté entre des états ouvert et fermé pour alternativement activer et interrompre l'alimentation du ventilateur 22 afin d'obtenir la vitesse de rotation moyenne désirée. Cette commutation est réalisée sur la base d'un signal de commande émis par le dispositif 30 et transmis aux contrôleurs 24 respectifs, par exemple au moyen de câbles.

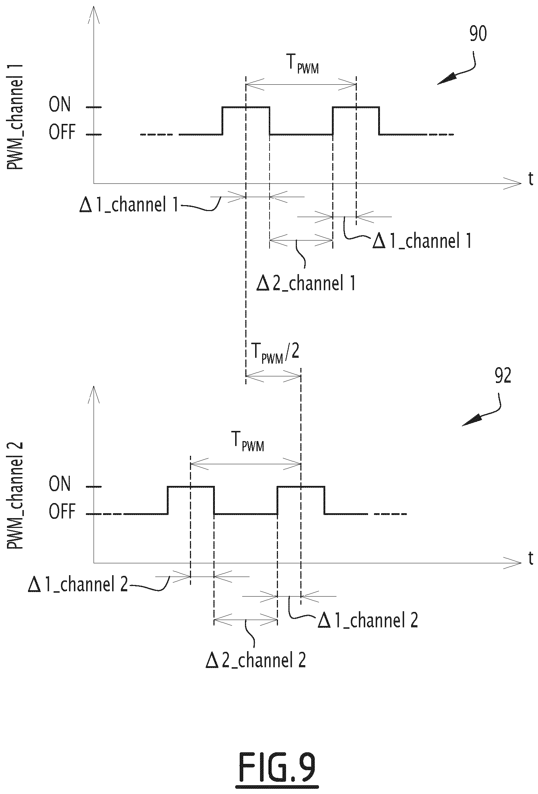

Un exemple de signal d'alimentation modulé est représenté par la courbe 90 sur la figure 9, dont l'évolution de l'amplitude est illustrée en fonction du temps « t ».

Avantageusement, le signal d'alimentation modulé est périodique avec une période notée T_{PWM}.

De préférence, la période T_{PWM} est égale à la durée de mesure T_{cycle}.

Dans l'exemple illustré, le signal modulé 90 comporte deux impulsions identiques de même durée et correspondant chacune à un état actif (tension non nulle, notée « ON » sur l'axe des ordonnées). Ladite durée est par exemple égale à 2 fois une première durée notée « Δ1_channel1 ».

Par exemple, l'amplitude de l'impulsion est choisie égale à une fraction de l'amplitude maximale de commande du ventilateur 22, par exemple égale à 10% ou moins de l'amplitude maximale, ou en variante, égale à 5% ou moins de l'amplitude maximale.

Deux impulsions consécutives sont séparées par un état inactif d'amplitude nulle, notée « OFF » sur l'axe des ordonnées. Cet état inactif a une durée notée « Δ2_channel1 » et dont la valeur est choisie de telle sorte que la somme des durées Δ1_channel1 x 2 et Δ2_channel1 soit égale à la période T_{PWM}.

Selon des exemples, la première durée Δ1_channel1 est donné par la formule suivante : V_{fan} x T_{PWM}/2, où V_{fan} est la vitesse de consigne calculée pour ce ventilateur 22 lors de l'étape S108 ou, le cas échéant, lors de l'étape S116.

La vitesse de consigne est ici une vitesse relative, exprimée en pourcentage, un pourcentage égal à zéro correspondant à une vitesse nulle, un pourcentage égal à 100% correspondant à une vitesse maximale.

La durée Δ2_channel1 est quant à elle donné par la formule (1 - V_{fan}) x T_{PWM}.

Cet exemple n'est pas limitatif et, en variante, d'autres formes de signal modulé pourraient être utilisées, avec des façons différentes de calculer le taux de modulation.

Un exemple de mise en œuvre de l'étape S110 correspondant à ces deuxièmes modes de réalisation est maintenant décrit en référence à la figure 7.

Le procédé démarre à l'étape S140.

Lors d'une étape S142, le circuit 24 est commuté vers un état fermé par le dispositif 30 pour activer le ventilateur 22.

Lors d'une étape S144, le dispositif 30 met à jour la valeur de consigne V_{fan} avec la dernière valeur de consigne calculée, par exemple celle calculée lors de l'itération la plus récente de l'étape S108 ou, le cas échéant, de l'étape S116.

Lors d'une étape S146, le dispositif 30 attend pendant une durée égale à la durée Δ1_channel1 tout en maintenant le circuit 24 dans l'état fermé, et donc en maintenant le ventilateur 22 en fonctionnement.

Lors d'étape S148, à l'expiration de la durée d'attente, le dispositif 30 commande la commutation du circuit 24 vers l'état ouvert pour arrêter le moteur du ventilateur 22.

Puis, lors d'une étape S150, le dispositif 30 attend pendant une durée égale à la durée Δ2_channel1 tout en maintenant le circuit 24 dans l'état ouvert, et donc en maintenant le ventilateur 22 à l'arrêt.

Lors d'une étape S152, à l'expiration de la durée d'attente, le circuit 24 est commuté vers un état fermé par le dispositif 30 pour activer le ventilateur 22.

Puis, lors d'une étape S154, semblable à l'étape S146, le dispositif 30 attend pendant une durée égale à la durée Δ1_channel1 tout en maintenant le circuit 24 dans l'état fermé, et donc en maintenant le ventilateur 22 en fonctionnement.

A l'issue de cette durée d'attente, le procédé repart à l'étape S144 pour mettre à jour la valeur de consigne V_{fan}. Les étapes S146 et suivantes sont réitérées avec des valeurs de durée d'attente Δ1_channel1 et Δ2_channel1 recalculées en fonction de la valeur de consigne mise à jour.

Le procédé de la figure 7 n'est pas limitatif et, en variante, pourrait être implémenté différemment.

Le procédé de la figure 7 est décrit en référence à un unique ventilateur 22 recevant une valeur de consigne V_{fan}, mais on comprend que ce procédé peut être transposé pour les autres ventilateurs 22 du système 4. Par exemple, plusieurs ventilateurs peuvent être commandés simultanément pour se voir appliquer la même valeur de consigne.

En variante, plusieurs instances du procédé peuvent être mises en œuvre séquentiellement ou en parallèle, indépendamment les unes des autres, pour piloter plusieurs ventilateurs 22.

Le pilotage des ventilateurs 22 par modulation de largeur d'impulsions est particulièrement fiable et simple à implémenter et donne un résultat satisfaisant même avec des circuits de commande 24 relativement rudimentaires et donc peu coûteux comparés à des contrôleurs de moteurs à vitesse variable.

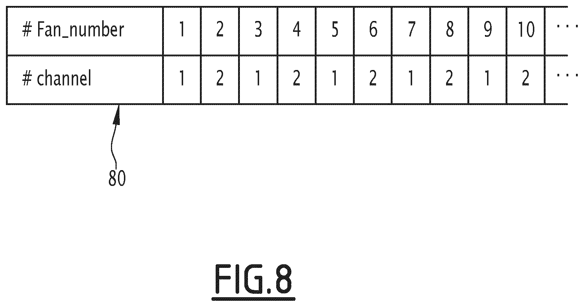

Avantageusement, dans certains modes de réalisation notamment illustrés aux figures 8 et 9, les ventilateurs 22 du système 4 d'au moins une des baies de stockage 6 sont partagés en au moins deux groupes différents et disjoints, les ventilateurs 22 respectifs desdits groupes étant pilotés par des signaux de modulation de largeur d'impulsions décalés dans le temps.

Cela permet notamment de ne pas démarrer tous les ventilateurs 22 au même moment, afin d'éviter des appels de courant électrique trop élevés sur la ligne d'alimentation 28, mais aussi d'éviter que l'arrêt simultané des ventilateurs 22 favorise l'accumulation de chaleur dans la cale qu'il serait difficile d'évacuer par la suite.

A cet effet, selon des modes de réalisation, un premier groupe de ventilateurs 22 du dispositif de refroidissement 4 est alimenté avec une première tension électrique d'alimentation modulée, tel que le signal PWM_channel1 représenté par la courbe 90 de la figure 9.

Un deuxième groupe de ventilateurs 22 du dispositif 4 est alimenté avec une deuxième tension électrique d'alimentation modulée, correspondant par exemple au deuxième signal PWM_channel2 représenté par la courbe 92 de la figure 9.

Avantageusement, chaque ventilateur 22 du premier groupe est adjacent avec un ventilateur 22 du deuxième groupe. Dit autrement, les ventilateurs 22 du premier groupe sont disposés de façon entrelacée ou alternée avec les ventilateurs 22 du deuxième groupe, comme illustré par le tableau 80 de la figure 8.

Dans ce tableau 80, les ventilateurs 22 du système 4 sont indexés par un numéro d'ordre (étiquette #Fan_number) en fonction de leur position dans la baie 6 et sont chacun associé à un signal de commande choisi parmi le premier signal PWM_channel1 (valeur « 1 » de l'étiquette #channel) et le deuxième signal PWM_channel2 (valeur « 2 » de l'étiquette #channel).

Par exemple, le premier ventilateur 22 appartient au premier groupe. Le deuxième ventilateur 22, voisin immédiat du premier ventilateur, appartient au deuxième groupe. Le troisième ventilateur, voisin immédiat du deuxième ventilateur, appartient au premier groupe. Et ainsi de suite.

Selon des modes de réalisation préférés, le deuxième signal PWM_channel2 est déphasé par rapport au premier signal PWM_channel1.

Autrement dit, le deuxième signal PWM_channel2 est décalé dans le temps par rapport au premier signal PWM_channel1. Par exemple, le deuxième signal PWM_channel2 est en avance par rapport au premier signal PWM_channel1.

Avantageusement, le deuxième signal PWM_channel2 est décalé par rapport au premier signal PWM_channel1 avec une durée égale à la moitié de la période T_{PWM}.

De préférence, le deuxième signal PWM_channel2 est similaire, voire identique au premier signal PWM_channel1 et comporte notamment des impulsions similaires à celles décrites pour le premier signal PWM_channel1.

Par exemple, comme visible sur la figure 9, chaque impulsion du deuxième signal PWM_channel2 a une durée égale à 2 fois la durée « Δ1_channel2 ». La durée « Δ1_channel2 » est égale à la durée Δ1_channel1.

La durée entre deux impulsions consécutives, notée « Δ2_channel2 », est égale à la durée Δ2_channel1.

Selon des modes de réalisation non décrits en détail, plus de deux groupes de ventilateurs 22 peuvent être définis. On définit alors autant de signaux de commande (de tensions d'alimentation modulées) que de groupes de ventilateurs, de façon analogue à celle décrite ci-dessus.

De préférence, les ventilateurs appartenant à ces groupes sont disposés de façon entrelacée ou alternée, de façon analogue à celle précédemment décrite.

Par exemple, lorsque trois groupes disjoints de ventilateurs 22 sont définis, chaque ventilateur 22 du premier groupe est adjacent avec un ventilateur 22 du deuxième groupe et chaque ventilateur 22 du troisième groupe est adjacent avec un ventilateur 22 du troisième groupe.

Autrement dit, dans cet exemple, le premier ventilateur 22 appartient au premier groupe. Le deuxième ventilateur 22, voisin immédiat du premier ventilateur, appartient au deuxième groupe. Le troisième ventilateur 22, voisin immédiat du deuxième ventilateur, appartient au troisième groupe. Le quatrième ventilateur 22, voisin immédiat du troisième ventilateur, appartient au premier groupe. Et ainsi de suite.

Par exemple, le premier groupe de ventilateurs est piloté par un premier signal de commande (PWM_channel1). Le deuxième groupe de ventilateurs est piloté par un deuxième signal de commande (PWM_channel2) identique ou similaire au premier signal de commande mais décalé par rapport au premier signal de commande d'un déphasage égal à la durée T_{PWM}/3. Le troisième groupe de ventilateurs est piloté par un troisième signal de commande (PWM_channel2) identique ou similaire au deuxième signal de commande mais décalé d'un déphasage égal à la durée T_{PWM}/3.

Ces exemples ne sont pas limitatifs et, en variante, les groupes de ventilateurs pourraient être définis différemment, notamment pour tenir compte d'une disposition différente des ventilateurs 22 dans chaque baie de stockage 6.

Grâce aux modes de réalisation de l'invention, la vitesse de rotation des ventilateurs 22 du système de refroidissement 4 est adaptée en fonction de la consommation électrique des appareils de réfrigération des containers réfrigérés 8, de manière à consommer le moins d'électricité possible tout en assurant un refroidissement efficace de la zone de stockage 6, notamment afin d'éviter tout endommagement des marchandises transportées.

## Revendications

1. Procédé de commande d'un système de refroidissement (4) comportant une pluralité de ventilateurs (22) configurés pour refroidir une zone de stockage (6) d'un navire (2), dans lequel une consommation électrique de containers réfrigérés (8) entreposés dans la zone de stockage (6) et de ventilateurs (22) du système de refroidissement (4) comprend un minimum, ce procédé comportant :
mesurer (S102, S104, S106) la consommation électrique de containers réfrigérés (8) entreposés dans la zone de stockage (6) et de ventilateurs (22) du système de refroidissement (4) pendant une durée de mesure ;
calculer (S108), par un dispositif électronique de commande, pour chaque ventilateur, une valeur de consigne de la vitesse de rotation, cette valeur de consigne étant calculée en fonction de la consommation électrique mesurée ;
appliquer (S110) la valeur de consigne calculée pour chacun des ventilateurs (22) ;
**caractérisé en ce que** la valeur de consigne est calculée (S108) en déterminant par itérations successives, une valeur de consigne qui minimise la consommation électrique totale en faisant varier la vitesse de rotation des ventilateurs du système de refroidissement, le calcul de la valeur de consigne (S108) comportant :
si le dispositif électronique de commande détecte qu'il s'agit d'une première itération du procédé, alors, une valeur prédéfinie est choisie automatiquement comme valeur de consigne (S124) ;
si le dispositif électronique de commande détecte qu'il s'agit d'une itération du procédé différente de la première itération, comparer (S128) la valeur mesurée de consommation électrique des containers réfrigérés et des ventilateurs du système de refroidissement pendant la durée de mesure, avec une précédente valeur de consommation électrique totale déterminée pour une précédente durée de mesure lors d'une précédente itération du procédé, auquel cas
si la valeur de consommation électrique totale est inférieure à la précédente valeur de consommation électrique totale, la valeur de consigne est définie (S130) comme étant égale à la précédente valeur de consigne, laquelle est augmentée d'une valeur de correction, la valeur de correction étant calculée (S126) en fonction de la valeur de consommation électrique totale déterminée pour ladite durée de mesure ;
ou, si la valeur de consommation électrique totale est supérieure ou égale à la précédente valeur de consommation électrique totale, la valeur de consigne est définie (S132) comme étant égale à la précédente valeur de consigne diminuée de la valeur de correction,
le sens d'une incrémentation par rapport aux précédentes itérations étant changé lorsqu'une variation de la consommation électrique change de signe par rapport à la précédente itération,
la valeur de correction ayant un signe positif ou un signe négatif.

2. Procédé selon la revendication 1, dans lequel le procédé comporte en outre, pour les valeurs de consigne calculées :
calculer (S112) une vitesse de rotation minimale, à partir de la consommation électrique mesurée, voire aussi à partir de la température maximale T_{hold_max}) autorisée dans la zone de stockage ;
comparer (S114) la valeur de consigne calculée avec la vitesse de rotation minimale ;
remplacer (S116) la valeur de consigne calculée par la vitesse de rotation minimale si la valeur de consigne calculée est inférieure à la vitesse de rotation minimale.

3. Procédé selon l'une quelconque des revendications précédentes, dans lequel la mesure de la consommation électrique, le calcul des valeurs de consigne et l'application des valeurs de consigne (S102, S104, S106, S108, S110) sont répétées périodiquement.

4. Procédé selon l'une quelconque des revendications précédentes, dans lequel chaque ventilateur (22) est connecté à un contrôleur de moteur à régulateur de vitesse (24), et dans lequel appliquer (S110) la valeur de consigne comporte l'envoi de la valeur de consigne calculée (setpoint_1, setpoint_2, ..., setpoint_n) pour ce ventilateur au contrôleur correspondant.

5. Procédé selon l'une quelconque des revendications 1 à 3, dans lequel appliquer (S110) la valeur de consigne calculée pour un ventilateur (22) comporte l'alimentation du ventilateur avec une tension électrique d'alimentation modulée comportant des impulsions périodiques, le taux de modulation des impulsions étant défini en fonction de la valeur de consigne calculée.

6. Procédé selon la revendication 5, dans lequel, pour l'application (S110) de la valeur de consigne, un premier groupe de ventilateurs (22) du dispositif de refroidissement est alimenté avec une première tension électrique d'alimentation modulée (PWM_channel1), un deuxième groupe de ventilateurs (22) du dispositif de refroidissement est alimenté avec une deuxième tension électrique d'alimentation modulée (PWM_channel2), la deuxième tension électrique d'alimentation modulée étant déphasée par rapport à la première tension électrique d'alimentation.

7. Procédé selon la revendication 6, dans lequel chaque ventilateur (22) du premier groupe est adjacent avec un ventilateur (22) du deuxième groupe.

8. Procédé selon l'une quelconque des revendications précédentes, dans lequel les containers réfrigérés (8) sont empilés en colonnes (10) dans la zone de stockage (6), chaque ventilateur (22) du dispositif de refroidissement (4) étant associé à au moins une colonne (10) de containers réfrigérés.

9. Dispositif électronique de commande (30) d'un système de refroidissement (4) comportant une pluralité de ventilateurs (22) configurés pour refroidir une zone de stockage (6) d'un navire (2), dans lequel une consommation électrique de containers réfrigérés (8) entreposés dans la zone de stockage (6) et de ventilateurs (22) du système de refroidissement (4) comprend un minimum, le dispositif électronique de commande étant programmé pour :
mesurer (S102, S104, S106) la consommation électrique de containers réfrigérés (8) entreposés dans la zone de stockage (6) et de ventilateurs (22) du système de refroidissement (4) pendant une durée de mesure ;
calculer (S108), par un dispositif électronique de commande, pour chaque ventilateur, une valeur de consigne de la vitesse de rotation, cette valeur de consigne étant calculée en fonction de la consommation électrique mesurée ;
appliquer (S110) la valeur de consigne calculée pour chacun des ventilateurs (22)
**caractérisé en ce que** le dispositif électronique de commande est programmé pour calculer la valeur de consigne (S108) en déterminant par itérations successives, une valeur de consigne qui minimise la consommation électrique totale en faisant varier la vitesse de rotation des ventilateurs du système de refroidissement, le calcul de la valeur de consigne (S108) comportant :
si le dispositif électronique de commande détecte qu'il s'agit d'une première itération du procédé, alors, une valeur prédéfinie est choisie automatiquement comme valeur de consigne (S124) ;
si le dispositif électronique de commande détecte qu'il s'agit d'une itération du procédé différente de la première itération, comparer (S128) la valeur mesurée de consommation électrique des containers réfrigérés et des ventilateurs du système de refroidissement pendant la durée de mesure, avec une précédente valeur de consommation électrique totale déterminée pour une précédente durée de mesure lors d'une précédente itération du procédé, auquel cas :
si la valeur de consommation électrique totale est inférieure à la précédente valeur de consommation électrique totale, la valeur de consigne est définie (S130) comme étant égale à la précédente valeur de consigne, laquelle est augmentée d'une valeur de correction, la valeur de correction étant calculée (S126) en fonction de la valeur de consommation électrique totale déterminée pour ladite durée de mesure ;
ou, si la valeur de consommation électrique totale est supérieure ou égale à la précédente valeur de consommation électrique totale, la valeur de consigne est définie (S132) comme étant égale à la précédente valeur de consigne diminuée de la valeur de correction,
le sens d'une incrémentation par rapport aux précédentes itérations étant changé lorsque la consommation électrique change de signe par rapport à la précédente itération,
la valeur de correction ayant un signe positif ou un signe négatif.

10. Navire (2), comportant :
une zone de stockage (6) dans laquelle sont entreposés des containers réfrigérés (8) ;
un dispositif de refroidissement (4) comprenant une pluralité de ventilateurs (22) configurés pour refroidir la zone de stockage (6) ; et
un dispositif de commande (30) programmé pour piloter le système de refroidissement (4) ;
**caractérisé en ce que** le dispositif de commande (30) est selon la revendication 9.

## Patentansprüche

1. Verfahren zur Steuerung eines Kühlsystems (4), das eine Vielzahl von Ventilatoren (22) umfasst, die konfiguriert sind, um einen Lagerbereich (6) eines Schiffs (2) zu kühlen, in dem ein Stromverbrauch von gekühlten Containern (8), die in dem Lagerbereich (6) gelagert sind, und von Ventilatoren (22) des Kühlsystems (4) ein Minimum umfasst, wobei dieses Verfahren umfasst:
Messen (S102, S104, S106) des Stromverbrauchs von gekühlten Containern (8), die in dem Lagerbereich (6) gelagert sind, und von Ventilatoren (22) des Kühlsystems (4) während einer Dauer der Messung;
Berechnen (S108), durch eine elektronische Steuervorrichtung, für jeden Ventilator, eines Sollwerts der Drehzahl, wobei dieser Sollwert in Abhängigkeit von dem gemessenen Stromverbrauch berechnet wird;
Anwenden (S110) des berechneten Sollwerts für jeden der Ventilatoren (22);
**dadurch gekennzeichnet, dass** der Sollwert berechnet wird (S108), indem durch aufeinanderfolgende Iterationen ein Sollwert bestimmt wird, der den gesamten Stromverbrauch minimiert, indem die Drehzahl der Ventilatoren des Kühlsystems variiert wird, wobei die Berechnung des Sollwerts (S108) umfasst:
wenn die elektronische Steuervorrichtung detektiert, dass es sich um eine erste Iteration des Verfahrens handelt, dann wird ein vordefinierter Wert automatisch als Sollwert ausgewählt (S124);
wenn die elektronische Steuervorrichtung detektiert, dass es sich um eine von der ersten Iteration verschiedene Iteration des Verfahrens handelt, Vergleichen (S128) des gemessenen Werts des Stromverbrauchs der gekühlten Container und der Ventilatoren des Kühlsystems während der Dauer der Messung mit einem vorherigen Wert des gesamten Stromverbrauchs, der für eine vorherige Dauer der Messung bei einer vorherigen Iteration des Verfahrens bestimmt wurde, in welchem Fall
wenn der Wert des gesamten Stromverbrauchs geringer ist als der vorherige Wert des gesamten Stromverbrauchs, wird der Sollwert definiert (S130) als gleich dem vorherigen Sollwert, welcher um einen Korrekturwert erhöht wird, wobei der Korrekturwert berechnet wird (S126) in Abhängigkeit von dem Wert des gesamten Stromverbrauchs, der für die genannte Dauer der Messung bestimmt wurde;
oder, wenn der Wert des gesamten Stromverbrauchs größer oder gleich dem vorherigen Wert des gesamten Stromverbrauchs ist, wird der Sollwert definiert (S132) als gleich dem vorherigen Sollwert, vermindert um den Korrekturwert,
wobei die Richtung einer Inkrementierung im Verhältnis zu den vorherigen Iterationen geändert wird, wenn eine Variation des Stromverbrauchs im Verhältnis zur vorherigen Iteration das Vorzeichen wechselt,
wobei der Korrekturwert ein positives Vorzeichen oder ein negatives Vorzeichen aufweist.

2. Verfahren nach Anspruch 1, in dem das Verfahren ferner, für die berechneten Sollwerte, umfasst:
Berechnen (S112) einer minimalen Drehzahl, ausgehend von dem gemessenen Stromverbrauch, gegebenenfalls auch ausgehend von der maximalen Temperatur T_{hold_max}) zulässig in dem Lagerbereich;
Vergleichen (S114) des berechneten Sollwerts mit der minimalen Drehzahl;
Ersetzen (S116) des berechneten Sollwerts durch die minimale Drehzahl, wenn der berechnete Sollwert geringer ist als die minimale Drehzahl.

3. Verfahren nach einem beliebigen der vorhergehenden Ansprüche, in dem die Messung des Stromverbrauchs, die Berechnung der Sollwerte und die Anwendung der Sollwerte (S102, S104, S106, S108, S110) periodisch wiederholt werden.

4. Verfahren nach einem beliebigen der vorhergehenden Ansprüche, in dem jeder Ventilator (22) mit einem Motorcontroller mit Drehzahlregler (24) verbunden ist, und in dem das Anwenden (S110) des Sollwerts das Senden des berechneten Sollwerts (setpoint_1, setpoint_2, ..., setpoint_n) für diesen Ventilator an den entsprechenden Controller umfasst.

5. Verfahren nach einem beliebigen der Ansprüche 1 bis 3, in dem das Anwenden (S110) des berechneten Sollwerts für einen Ventilator (22) das Speisen des Ventilators mit einer modulierten elektrischen Versorgungsspannung umfasst, die periodische Impulse umfasst, wobei der Modulationsgrad der Impulse in Abhängigkeit von dem berechneten Sollwert definiert wird.

6. Verfahren nach Anspruch 5, in dem, für die Anwendung (S110) des Sollwerts, eine erste Gruppe von Ventilatoren (22) der Vorrichtung zur Kühlung mit einer ersten modulierten elektrischen Versorgungsspannung (PWM_channel1) gespeist wird, eine zweite Gruppe von Ventilatoren (22) der Vorrichtung zur Kühlung mit einer zweiten modulierten elektrischen Versorgungsspannung (PWM_channel2) gespeist wird, wobei die zweite modulierte elektrische Versorgungsspannung gegenüber der ersten elektrischen Versorgungsspannung phasenverschoben ist.

7. Verfahren nach Anspruch 6, in dem jeder Ventilator (22) der ersten Gruppe benachbart zu einem Ventilator (22) der zweiten Gruppe ist.

8. Verfahren nach einem beliebigen der vorhergehenden Ansprüche, in dem die gekühlten Container (8) in Säulen (10) in dem Lagerbereich (6) gestapelt sind, wobei jeder Ventilator (22) der Vorrichtung zur Kühlung (4) mindestens einer Säule (10) von gekühlten Containern zugeordnet ist.

9. Elektronische Steuervorrichtung (30) eines Kühlsystems (4), das eine Vielzahl von Ventilatoren (22) umfasst, die konfiguriert sind, um einen Lagerbereich (6) eines Schiffs (2) zu kühlen, in dem ein Stromverbrauch von gekühlten Containern (8), die in dem Lagerbereich (6) gelagert sind, und von Ventilatoren (22) des Kühlsystems (4) ein Minimum umfasst, wobei die elektronische Steuervorrichtung programmiert ist zum:
Messen (S102, S104, S106) des Stromverbrauchs von gekühlten Containern (8), die in dem Lagerbereich (6) gelagert sind, und von Ventilatoren (22) des Kühlsystems (4) während einer Dauer der Messung;
Berechnen (S108), durch eine elektronische Steuervorrichtung, für jeden Ventilator, eines Sollwerts der Drehzahl, wobei dieser Sollwert in Abhängigkeit von dem gemessenen Stromverbrauch berechnet wird;
Anwenden (S110) des berechneten Sollwerts für jeden der Ventilatoren (22)
**dadurch gekennzeichnet, dass** die elektronische Steuervorrichtung programmiert ist, um den Sollwert (S108) zu berechnen, indem durch aufeinanderfolgende Iterationen ein Sollwert bestimmt wird, der den gesamten Stromverbrauch minimiert, indem die Drehzahl der Ventilatoren des Kühlsystems variiert wird, wobei die Berechnung des Sollwerts (S108) umfasst:
wenn die elektronische Steuervorrichtung detektiert, dass es sich um eine erste Iteration des Verfahrens handelt, dann wird ein vordefinierter Wert automatisch als Sollwert ausgewählt (S124);
wenn die elektronische Steuervorrichtung detektiert, dass es sich um eine von der ersten Iteration verschiedene Iteration des Verfahrens handelt, Vergleichen (S128) des gemessenen Werts des Stromverbrauchs der gekühlten Container und der Ventilatoren des Kühlsystems während der Dauer der Messung mit einem vorherigen Wert des gesamten Stromverbrauchs, der für eine vorherige Dauer der Messung bei einer vorherigen Iteration des Verfahrens bestimmt wurde, in welchem Fall:
wenn der Wert des gesamten Stromverbrauchs geringer ist als der vorherige Wert des gesamten Stromverbrauchs, wird der Sollwert definiert (S130) als gleich dem vorherigen Sollwert, welcher um einen Korrekturwert erhöht wird, wobei der Korrekturwert berechnet wird (S126) in Abhängigkeit von dem Wert des gesamten Stromverbrauchs, der für die genannte Dauer der Messung bestimmt wurde;
oder, wenn der Wert des gesamten Stromverbrauchs größer oder gleich dem vorherigen Wert des gesamten Stromverbrauchs ist, wird der Sollwert definiert (S132) als gleich dem vorherigen Sollwert, vermindert um den Korrekturwert,
wobei die Richtung einer Inkrementierung im Verhältnis zu den vorherigen Iterationen geändert wird, wenn eine Variation des Stromverbrauchs im Verhältnis zur vorherigen Iteration das Vorzeichen wechselt,
wobei der Korrekturwert ein positives Vorzeichen oder ein negatives Vorzeichen aufweist.

10. Schiff (2), umfassend:
einen Lagerbereich (6), in dem gekühlte Container (8) gelagert sind;
eine Vorrichtung zur Kühlung (4), die eine Vielzahl von Ventilatoren (22) umfasst, die konfiguriert sind, um den Lagerbereich (6) zu kühlen; und
eine Steuervorrichtung (30), die programmiert ist, um das Kühlsystem (4) anzusteuern;
**dadurch gekennzeichnet, dass** die Steuervorrichtung (30) nach Anspruch 9 ist.

## Claims

1. Method for controlling a cooling system (4) comprising a plurality of fans (22) configured to cool a storage area (6) of a vessel (2), in which an electrical consumption of refrigerated containers (8) stored in the storage area (6) and of fans (22) of the cooling system (4) comprises a minimum, this method comprising:
measuring (S102, S104, S106) the electrical consumption of refrigerated containers (8) stored in the storage area (6) and of fans (22) of the cooling system (4) during a measurement duration;
calculating (S108), by an electronic control device, for each fan, a setpoint value of the rotational speed, this setpoint value being calculated as a function of the measured electrical consumption;
applying (S110) the calculated setpoint value for each of the fans (22);
**characterized in that** the setpoint value is calculated (S108) by determining by successive iterations, a setpoint value that minimizes the total electrical consumption by varying the rotational speed of the fans of the cooling system, the calculation of the setpoint value (S108) comprising:
if the electronic control device detects that it is a first iteration of the method, then, a predefined value is chosen automatically as setpoint value (S124);
if the electronic control device detects that it is an iteration of the method different from the first iteration, comparing (S128) the measured value of electrical consumption of the refrigerated containers and of the fans of the cooling system during the measurement duration, with a previous total electrical consumption value determined for a previous measurement duration during a previous iteration of the method, in which case
if the total electrical consumption value is less than the previous total electrical consumption value, the setpoint value is defined (S130) as being equal to the previous setpoint value, which is increased by a correction value, the correction value being calculated (S126) as a function of the total electrical consumption value determined for said measurement duration;
or, if the total electrical consumption value is greater than or equal to the previous total electrical consumption value, the setpoint value is defined (S132) as being equal to the previous setpoint value decreased by the correction value,
the direction of an incrementation relative to the previous iterations being changed when a variation of the electrical consumption changes sign relative to the previous iteration,
the correction value having a positive sign or a negative sign.

2. Method according to claim 1, in which the method further comprises, for the calculated setpoint values:
calculating (S112) a minimum rotational speed, from the measured electrical consumption, or even also from the maximum temperature T_{hold_max}) authorized in the storage area;
comparing (S114) the calculated setpoint value with the minimum rotational speed;
replacing (S116) the calculated setpoint value by the minimum rotational speed if the calculated setpoint value is less than the minimum rotational speed.

3. Method according to any one of the preceding claims, in which the measurement of the electrical consumption, the calculation of the setpoint values and the application of the setpoint values (S102, S104, S106, S108, S110) are repeated periodically.

4. Method according to any one of the preceding claims, in which each fan (22) is connected to a speed-regulator motor controller (24), and in which applying (S110) the setpoint value comprises the sending of the calculated setpoint value (setpoint_1, setpoint_2, ..., setpoint_n) for this fan to the corresponding controller.

5. Method according to any one of claims 1 to 3, in which applying (S110) the calculated setpoint value for a fan (22) comprises supplying the fan with a modulated electrical supply voltage comprising periodic pulses, the modulation rate of the pulses being defined as a function of the calculated setpoint value.

6. Method according to claim 5, in which, for the application (S110) of the setpoint value, a first group of fans (22) of the cooling device is supplied with a first modulated electrical supply voltage (PWM_channel1), a second group of fans (22) of the cooling device is supplied with a second modulated electrical supply voltage (PWM_channel2), the second modulated electrical supply voltage being phase-shifted relative to the first electrical supply voltage.

7. Method according to claim 6, in which each fan (22) of the first group is adjacent with a fan (22) of the second group.

8. Method according to any one of the preceding claims, in which the refrigerated containers (8) are stacked in columns (10) in the storage area (6), each fan (22) of the cooling device (4) being associated with at least one column (10) of refrigerated containers.

9. Electronic control device (30) of a cooling system (4) comprising a plurality of fans (22) configured to cool a storage area (6) of a vessel (2), in which an electrical consumption of refrigerated containers (8) stored in the storage area (6) and of fans (22) of the cooling system (4) comprises a minimum, the electronic control device being programmed to:
measure (S102, S104, S106) the electrical consumption of refrigerated containers (8) stored in the storage area (6) and of fans (22) of the cooling system (4) during a measurement duration;
calculate (S108), by an electronic control device, for each fan, a setpoint value of the rotational speed, this setpoint value being calculated as a function of the measured electrical consumption;
apply (S110) the calculated setpoint value for each of the fans (22) **characterized in that** the electronic control device is programmed to calculate the setpoint value (S108) by determining by successive iterations, a setpoint value that minimizes the total electrical consumption by varying the rotational speed of the fans of the cooling system, the calculation of the setpoint value (S108) comprising:
if the electronic control device detects that it is a first iteration of the method, then, a predefined value is chosen automatically as setpoint value (S124);
if the electronic control device detects that it is an iteration of the method different from the first iteration, comparing (S128) the measured value of electrical consumption of the refrigerated containers and of the fans of the cooling system during the measurement duration, with a previous total electrical consumption value determined for a previous measurement duration during a previous iteration of the method, in which case:
if the total electrical consumption value is less than the previous total electrical consumption value, the setpoint value is defined (S130) as being equal to the previous setpoint value, which is increased by a correction value, the correction value being calculated (S126) as a function of the total electrical consumption value determined for said measurement duration;
or, if the total electrical consumption value is greater than or equal to the previous total electrical consumption value, the setpoint value is defined (S132) as being equal to the previous setpoint value decreased by the correction value,
the direction of an incrementation relative to the previous iterations being changed when a variation of the electrical consumption changes sign relative to the previous iteration,
the correction value having a positive sign or a negative sign.

10. Vessel (2), comprising:
a storage area (6) in which refrigerated containers (8) are stored;
a cooling device (4) comprising a plurality of fans (22) configured to cool the storage area (6); and
a control device (30) programmed to drive the cooling system (4);
**characterized in that** the control device (30) is according to claim 9.
